Europäisches Patentamt

(19) European Patent Office

Office européen des brevets

(11) Numéro de publication: **0 013 637**
**A1**

(12) # DEMANDE DE BREVET EUROPEEN

(21) Numéro de dépôt: 80400006.5

(22) Date de dépôt: 03.01.80

(51) Int. Cl.³: **B 66 C 1/08**
**H 02 P 9/08, H 01 F 7/18**

(30) Priorité: 04.01.79 FR 7900681

(43) Date de publication de la demande:
23.07.80 Bulletin 80/15

(84) Etats Contractants Désignés:
BE CH DE GB IT LU NL

(71) Demandeur: Ets Raoul Lenoir
4, Rue Neuve
F-54402 Longwy Bas(FR)

(72) Inventeur: Denis, Jean-Marie
24, rue de Sesslich
Wolkrange(BE)

(74) Mandataire: Metz, Paul
95 Rue la Ganzau
F-67100-Strasbourg(FR)

(54) Circuit d'alimentation électrique en courant continu à commande d'inversion de polarité et à tension réglable pour engin de levage autonome à électro-aimant.

(57) Circuit d'alimentation en courant continu à tension réglable et inversion de polarité à partir d'une machine tournante génératrice de courant continu, auto-excitée, à bobinage de type shunt alimenté par une source indépendante de tension continue remarquable en ce que le circuit inducteur comprend d'une part, aux bornes de la bobine d'excitation (6) un circuit d'inversion bipolaire (8) alimenté à partir de la source indépendante de tension continue (7) et commandé à partir d'un inverseur manuel (37) par couplage optoélectronique, le circuit inducteur comprenant d'autre part en série avec la bobine d'excitation (6) un circuit bidirectionnel de commutation (13) à action différée, couplé optoélectriquement par 66 à un temporisateur (53) permettant d'ajuster dans chacun des cas de polarités la valeur de la tension induite et en ce que le circuit induit comprend aux bornes d'utilisation (2) et (3) un stabilisateur (36) de tension commandant le circuit bidirec-tionnel de commutation (13) par l'émetteur du photocoupleur (66) du temporisateur (53).

De façon non limitative, le domaine d'application de l'invention est celui de la commande d'électro-aimants de levage sur engins autonomes.

fig.1

0013637

## Circuit d'alimentation électrique en courant continu à commande d'inversion de polarités et à tension règlable pour engin de levage autonome à électro-aimant.

L'invention se rapporte à un circuit d'alimentation électrique en courant continu à commande d'inversion de polarité et à tension règlable destiné à un engin de levage, en particulier à l'alimentation en énergie électrique d'un électro-aimant installé sur un engin autonome.

Pour libérer une pièce ferromagnétique rendue solidaire des pièces polaires d'un électro-porteur, il faut appliquer à l'électro-aimant une tension d'alimentation de polarité inverse et de valeur réduite.

Cette inversion se réalise encore actuellement directement par l'intermédiaire de manipulateurs ou inverseurs dont les principales réalisations sont précisées ci-après :

En premier lieu, l'énergie électrique est fournie par une génératrice à courant continu à excitation séparée alimentée par les batteries d'équipement de l'engin autonome porteur sur son enroulement d'excitation à travers un inverseur bipolaire à 3 positions.

L'électro-porteur est relié directement à l'induit de la génératrice. La fermeture de l'inverseur dans une position extrême produit le flux inducteur nécessaire pour alimenter l'électro-porteur à sa tension nominale permettant le levage et le transport des pièces ferromagnétiques. Dans l'autre position, la tension d'induit est inversée et une résistance série limite sa valeur, les pièces ferromagnétiques sont libérées.

La fiabilité de ce procédé s'avère médiocre car elle dépend entièrement du bon état des batteries de l'engin porteur. En effet, la consommation en courant d'excitation peut atteindre selon la puissance de la génératrice jusqu'à plusieurs dizaines d'ampères. Cette forte consommation réduit notablement la durée de vie des batteries rendant par là même la disponibilité de l'engin moins sûre.

De plus, les contacts de l'inverseur bipolaire coupent un courant important dans un circuit de nature selfique, entraînant l'usure prématurée de ceux-ci. Enfin, un court-circuit dans le câble de liaison entre l'induit de la génératrice et l'électro-porteur, ou un défaut de ce dernier, peut conduire à sa destruction.

On procède aussi à l'aide d'une génératrice à courant continu à excitation de type shunt, dont l'induit est relié à un groupe de contacteurs inverseurs de puissance permettant d'appliquer aux bornes de l'électro-porteur une tension d'alimentation selon les polarités désirées. Dans un cas de polarités, un contacteur introduit des résistances en série avec l'électro-porteur de façon à réduire et éventuellement ajuster la tension appliquée à ses bornes pour permettre la libération correcte des pièces transportées.

Les bobines des contacteurs sont alimentées également par la tension d'induit de la génératrice et sont commandées par un inverseur unipolaire à trois positions sur lequel agit l'utilisateur.

Outre les inconvénients précédents que l'on retrouve, ce procédé s'avère relativement coûteux car il nécessite l'utilisation de contacteurs multipolaires à soufflage électromagnétiques ; de plus, malgré ce dispositif, les contacts s'usent assez rapidement en raison des courants importants coupés dans un circuit de nature selfique. L'équipement réalisé selon ce procédé se montre encombrant, ce qui rend difficile l'installation sur l'engin autonome de manutention.

Enfin, les bobines des contacteurs étant alimentés par la tension d'induit de la génératrice, le conducteur de l'engin, en actionnant l'inverseur de commande, manipule une tension continue élevée, ce qui constitue un risque d'accident certain en cas de défaut d'isolement des circuits.

On peut citer aussi les réalisations des brevets suivants faisant état de dispositifs divers :

Dans le brevet français n° 2.041.484, on forme à partir des batteries une tension continue plus élevée pour alimenter l'enroulement d'excitation d'une génératrice à excitation séparée. Un manipulateur à sept contacts permet d'inverser les polarités de l'alimentation des inducteurs et de faire varier la tension de sortie en agissant sur une résistance.

Cet ensemble reprend un manipulateur. Il en résulte les inconvénients des ensembles mécaniques : usure, affaiblissement des isolants de par la coupure d'un circuit selfique provoquant un danger électrique ; de plus, toute l'énergie est consommée sur les batteries.

Dans le brevet français n° 2.050.252 on utilise des montages à condensateurs avec une génératrice de type shunt. Deux groupes de condensateurs sont chargés simultanément par la tension d'induit. On décharge l'un ou l'autre groupe dans les inducteurs pour obtenir l'inversion de polarité.

Les condensateurs se vident au bout de quelques jours de non fonctionnement. Il faut alors une énergie extérieure pour faire repartir le système. L'usure mécanique existe également.

Dans le brevet français n° 2.209.252, l'inversion s'effectue en provoquant l'entrée en oscillation du bobinage d'excitation par branchement à ses bornes d'un condensateur de valeur appropriée. L'ensemble est appliqué aux bornes de l'induit.

L'ouverture de ce circuit provoque l'entrée en oscillation. On ferme le circuit lorsque le courant dans les inducteurs s'est inversé ce qui permet l'autoexcitation de la génératrice selon des polarités inverses.

Le principal inconvénient réside dans l'instabilité de l'oscillation. Le système se bloque si le flux inducteur rémanent vient à disparaître.

Dans le brevet français n° 2.209.253, on utilise une génératrice de type shunt dont l'excitation est mise en parallèle avec la bobine de l'électro-porteur vers les inducteurs ce qui entraîne l'inversion de sens dans le courant d'excitation et donc le changement de polarité.

L'invention vise un dispositif permettant à un utilisateur d'inverser à volonté les polarités d'alimentation d'une source d'énergie électrique continue par l'action d'un moyen de commande.

Ce dispositif met en oeuvre des courants faibles, consomme peu d'énergie sur les batteries (ou toute autre source auxiliaire), s'accommode de leur mauvais état éventuel, ne réduit pas leur durée de vie, comporte un maximum de composants statiques ne nécessitant donc pas d'entretien, occupe un volume réduit, protège la machine tournante en cas de court-circuit de l'utilisation électrique, possède des circuits de contrôle alimentés en tension de sécurité isolée des circuits de l'utilisation électrique.

Ce dispositif donne satisfaction par sa commodité d'emploi, sa grande sécurité et son coût intéressant.

L'alimentation électrique en courant continu de polarités inversables selon l'invention se caractérise par l'utilisation d'une génératrice à courant continu à excitation de type shunt à laquelle on adjoint un multiplicateur de tension continue de faible puissance, des moyens de stockage de cette énergie électrique, des moyens de commutation et d'inversion bi-polaires agissant sur l'excitation de la génératrice pour l'inversion de la tension induite et un moyen bidirectionnel réglable de commutation pour assurer l'auto-excitation de la génératrice.

La nature fortement inductive du circuit de charge impose le respect des constantes de temps inhérentes à ce type de circuit. Il est donc nécessaire de marquer un temps d'arrêt de l'alimentation avant de commander l'inversion des polarités.

On peut ainsi prévoir une temporisation réglable par l'utilisateur· déclenchée par la commande manuelle.

Pour pallier aux variations de tension dues au changement de régime du véhicule porteur, on stabilise la tension d'alimentation en associant un moyen de contrôle au moyen bidirectionnel de commutation.

On constitue une boucle de régulation automatique de tension d'alimentation en commandant le moyen de contrôle par la tension d'erreur résultant de la comparaison entre la tension d'induit de la génératrice et une tension de référence.

L'invention sera décrite ci-après à titre d'exemple non limitatif , en référence aux dessins dans lesquels :

- la figure 1 est un schéma d'ensemble du circuit électrique du dispositif selon l'invention ;

- la figure 2 est un schéma de détail du circuit de temporisation de la commande d'inversion de polarité ;

- la figure 3 est un schéma du circuit de contrôle destiné à stabiliser la tension d'alimentation de la source de courant continu ;

- la figure 4 est le schéma d'un exemple de réalisation d'un multiplicateur de tension continue du type onduleur.

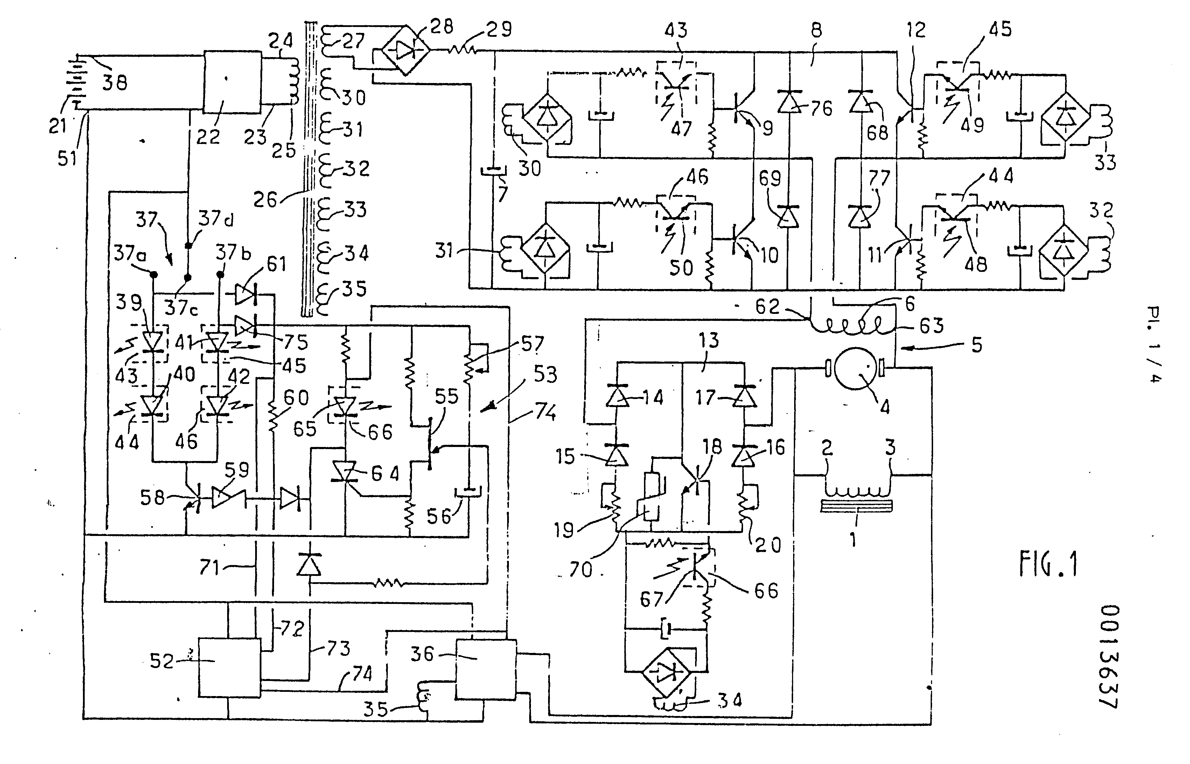

On se réfère tout d'abord à la figure 1.

L'utilisation électrique a été représentée sous la forme d'une bobine 1, par exemple la bobine de l'électro-porteur. Les bornes 2 et 3 sont reliées directement à l'induit 4 d'une génératrice à courant continu 5 dont l'enroulement d'excitation 6 est alimenté d'une part temporairement par une énergie emmagasinée dans un condensateur 7 à travers un groupe de commutation et d'inversion bipolaire 8 constitué par les transistors 9, 10, 11 et 12 et d'autre part par la tension de l'induit 4 à travers un circuit bidirectionnel de commutation 13 comprenant un pont formé des diodes 14, 15, 16 et 17, le transistor 18 monté en diagonale, shunté par une varistance 70 et commandé par un photocoupleur, et les résistances variables montées en rhéostat 19 et 20. Ces dernières permettent d'ajuster dans chacun des cas de polarités, la valeur de la tension d'alimentation de la bobine 1.

0013637

L'énergie stockée dans le condensateur 7 est fournie par les batteries 21 de l'engin de manutention à travers un onduleur autonome 22 décrit ci-après réalisant la conversion continu-alternatif, dont les bornes de sortie 23 et 24 alimentent le primaire 25 d'un transfo 26 ; l'enroulement secondaire 27 du transfo 26 alimente le condensateur 7 à travers un pont redresseur 28 et une résitance 29 limitant les pointes de courant.

Le transfo 26 comporte plusieurs autres enroulements secondaires indépendants 30, 31, 32, 33, 34 délivrant des tensions auxiliaires utilisées après redressement et filtrage pour la commande des transistors 9, 10, 11, 12, et 18.

L'enroulement secondaire 35 est relié directement au circuit de contrôle particulier 36 servant à la stabilisation de la tension de l'induit 4, dont le fonctionnement sera décrit plus loin.

Pour une plus grande clarté du schéma de la figure 1, les enroulements secondaires 30, 31, 32, 33, 34 et 35 sont représentés sur le transfo 26 et au niveau des circuits qu'ils alimentent.

Comme représenté sur la figure 1, le moyen de commande est un inverseur unipolaire 37 à 3 positions, les positions 37a et 37b étant de part et d'autre de la position centrale 37c. La borne commune 37d de l'inverseur 37 est reliée à la borne positive 38 des batteries 21.

Les positions 37a et 37b de l'inverseur 37 sont reliées chacune à un groupe de diodes électro-luminescentes 39, 40 et 41, 42 appartenant respectivement aux photo-coupleurs 43, 44 et 45, 46 dont les récepteurs, les photo-transistors respectivement 47, 48 et 49,50 commandent respectivement les transistors 9, 11 et 12, 10 du groupe d'inversion 8, à partir de l'énergie délivrée par les enroulements auxiliaires du transfo 26 et redressée.

Les connexions positive 38 et négative 51 de la batterie 21 alimentent en tension de sécurité un circuit de commande de la temporisation 52 retardant l'effet de l'inversion des polarités d'alimentation, le circuit de contrôle particulier 36, et, à travers le moyen de commande 37, les diodes électro-luminescentes des photo-coupleurs 43, 44, 45, 46 et le circuit temporisant l'action du groupe d'inversion 8.

Le circuit temporisateur proprement dit 53 comprend essentiellement un transistor unijonction 55, un condensateur 56 et un potentiomètre de réglage 57.

Pour  alimenter la bobine de l'électro-porteur 1 ou plus généralement une utilisation électrique selon une polarité donnée, par exemple la borne 2 positive par rapport à la borne 3, l'utilisateur bascule l'inverseur 37 en position 37 a, le transistor 58 devient conducteur, car sa base est alimentée à travers le circuit diode Zener 59, résistance 60, diode 61, et permet l'alimentation des diodes électro-luminescentes 39, 40, des photo-coupleurs 43 et 44 ; les photo-transistors respectivement 47 et 48 de ces mêmes photo-coupleurs se saturent et entraînent la conduction des transistors 9 et 11, qui permettent au condensateur 7 de libérer son énergie dans la bobine d'excitation 6 de la génératrice 5, en appliquant ses potentiels positif et négatif respectivement aux bornes 62 et 63 de la bobine 6.

Une tension apparaît aux bornes de l'induit 4 de la génératrice, dans le sens potentiel positif vers borne 2 de l'utilisation 1 et négatif vers sa borne 3.

Le circuit 33 termine sa temporisation et envoie une impulsion de commande au thyristor 64 qui devenant conducteur, provoque le blocage du transistor 58 qui entraîne lui-même, la diode 75, et ce sont les photo-coupleurs 45 et 46 qui sont actionnés, entraînant la conduction respectivement des transistors 12 et 10 du groupe d'inverseur 8 ; le condensateur 7 alimente la bobine d'excitation 6 avec les polarités de sens positif sur borne 63 et négatif sur borne 62 ; il en résulte la naissance d'une tension sur l'induit 4 avec les polarités de sens positif vers la borne 3 de l'utilisation 1 et négatif vers sa borne 2.

A la fin de la temporisation du circuit 53, les transistors 12 et 10 sont rebloqués et le transistor 18 devient conducteur, permettant l'auto-excitation de la génératrice 5, car son induit 4 alimente la bobine d'excitation 6 à travers le circuit diode 16, rhéostat 20, transistor 18, diode 14. L'utilisation 1 est donc alimentée sous une tension ajustable grâce au rhéostat 20 et de polarités de sens positif sur borne 3 et négatif sur borne 2.

Pour commander l'arrêt de l'alimentation, l'utilisateur place l'inverseur de commande 37 en position centrale 37c ; le photo-coupleur 66 n'étant plus actionné, le transistor 18 se rebloque et, la tension d'alimentation de l'utilisation 1 s'annule, car la génératrice 5 n'est plus auto-excitée.

Les surtensions engendrées par la coupure du courant d'alimentation de la bobine d'excitation 6 sont absorbées par le condensateur 7 à travers, cette fois, les diodes 76 et 77, et par la varistance 70.

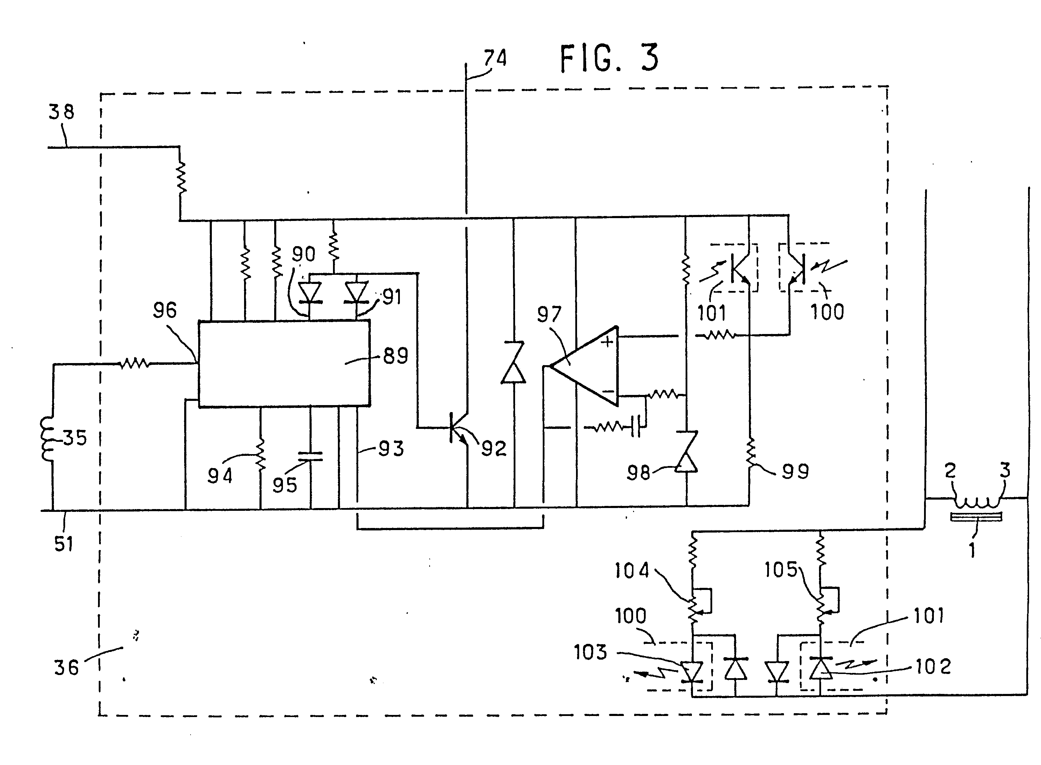

Le circuit de contrôle particulier 36, dont le détail est représenté figure 3 et qui sera décrit plus loin, sert à la stabilisation automatique de la tension d'alimentation de l'utilisation 1. Comme on le voit sur la figure 1, il est alimenté directement par les batteries 21, par les connexions 38 et 51, et il est relié directement aux bornes 2 et 3 de l'utilisation 1. Pour stabiliser la tension à ces bornes, il est nécessaire

0013637

d'agir sur le courant fourni par l'induit 4 au bobinage d'excitation 6 quand la génératrice 5 est auto-excitée ; le transistor 18 permet d'effectuer cette fonction car il est en circuit quelles que soient les polarités de la tension d'alimentation de l'utilisation 1. On utilise le principe de la modulation de largeur d'impulsion c'est à dire que le transistor 18 fonctionne en "tout ou rien" car il est commandé par des impulsions de fréquence de récurrence fixe mais de rapport cyclique variable selon l'écart entre la valeur de consigne de la tension d'alimentation de la bobíne ou utilisation 1 et sa valeur réelle instantanée sous l'action des perturbations (variation de vitesse de rotation de la génératrice 5, etc...).

Les impulsions sont générées par le circuit de contrôle 36 et disponibles, sous forme de niveaux de tension "haut" et "bas", sur sa sortie qui est reliée par la connexion 74 au photo-coupleur 66, qui actionne donc le transistor 18 au rythme de ces impulsions.

Un enroulement particulier 35 du transfo 26 délivre au circuit de contrôle 36, une tension alternative dont la fréquence détermine la fréquence de récurrence des impulsions.

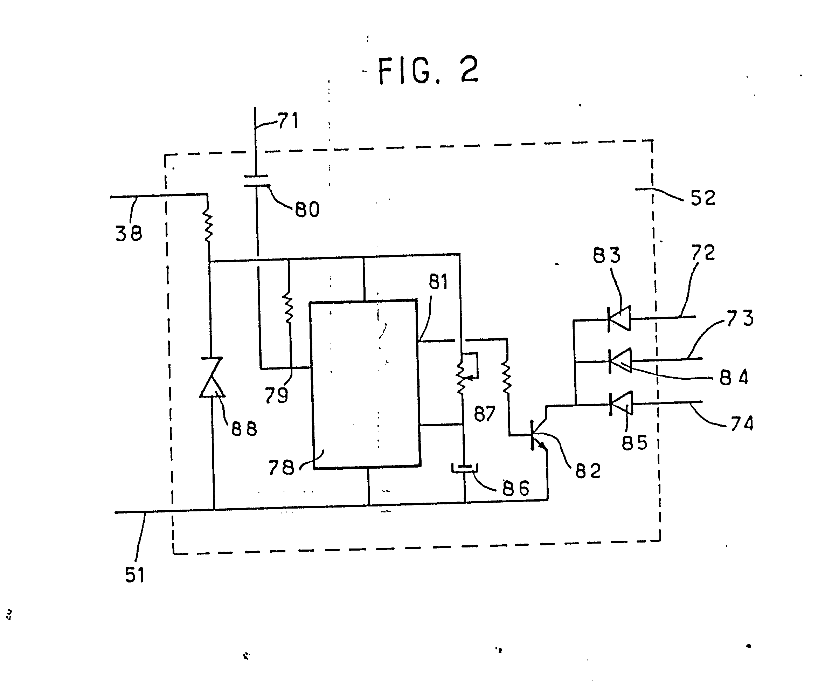

Le schéma de la figure 2 donne le détail du circuit temporisateur 52, qui comprend essentiellement un circuit intégré monostable 78 déclenché par les coupures de potentiel de la connexion 71 transmises à son entrée 79 par le condensateur 80. La sortie 81 commande un transistor 82 qui, par l'intermédiaire des diodes 83, 84 et 85, maintient à un niveau bas les connexions respectivement 72, 73 et 74 pendant la durée de la temporisation ; celle-ci est déterminée par le circuit condensateur 86 – potentiomètre 87 et peut être ajustée à l'aide de ce dernier.

L'alimentation fournie par les batteries 21 par les connexions 38 et 51, est stabilisée par la diode Zener 88.

Le schéma de la figure 3 représente la tension d'alimentation de l'utilisation 1. Le circuit utilise un circuit intégré 89 du type alimentation à découpage ; qui délivre sur ses sorties 90 et 91 des impulsions qui commandent le transistor 92 ; ce dernier, relié à la connexion 74, actionne le photo-coupleur 66 (figure 1) qui assure la commande du transistor 18, comme décrit ci-dessus.

La largeur des impulsions délivrées par le circuit 89 résulte de la comparaison entre une rampe de tension et la tension sur l'entrée de commande 93 ; cette rampe de tension, dont l'amplitude est déterminée par la résistance 94 et le condensateur 95, est synchronisée par les passages par zéro de la tension alternative délivrée à l'entrée 96 du circuit 89 par l'enroulement particulier 35 du transfo 26.

La tension appliquée à l'entrée de commande 93 est fournie par la sortie d'un amplificateur opérationnel 97, monté en ampli-correcteur de la tension d'erreur résultant de la comparaison entre la tension de référence fournie par la diode Zener 98 et la tension aux bornes de la résistance 99 ; cette dernière tension est fournie par l'un ou l'autre des photo-coupleurs 100 ou 101, suivant les polarités souhaitées de la tension d'alimentation de la bobine ou de l'utilisation 1.

Les diodes électro-luminescentes 102 et 103 des photo-coupleurs 100 et 101, sont, chacune dans un sens, reliées aux bornes 2 et 3 de l'utilisation 1, à travers les potentiomètres respectivement 104 et 105 qui permettent le réglage de la tension d'alimentation de l'utilisation 1 dans l'un ou l'autre cas des polarités.

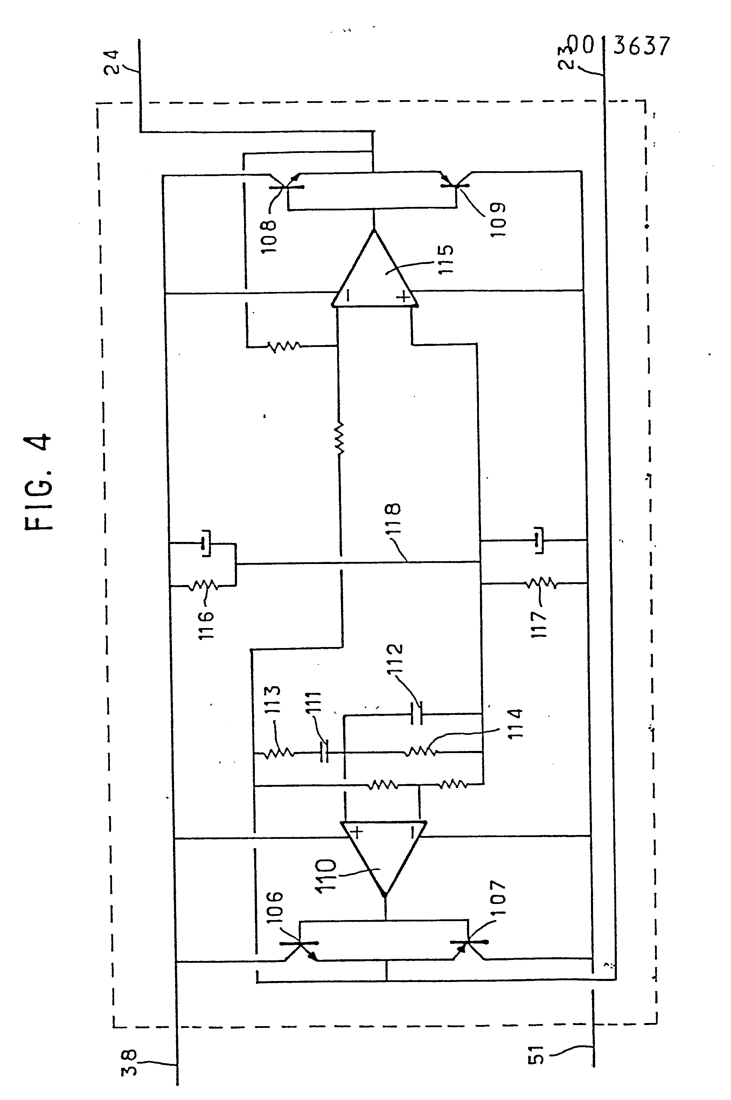

Le schéma de la figure 4 donne le détail d'un exemple de réalisation de l'onduleur autonome 22 utilisable dans le dispositif selon l'invention. Le montage comprend deux paires de transistors complémentaires 106, 107 et 108, 109 montés en pont aux bornes 38 et 51 de la batterie 21, et les bornes 23 et 24 de l'enroulement primaire 25 du transfo 26 sont reliées au point médian de chaque paire.

L'amplificateur opérationnel 110, monté en oscillateur sinusoïdal à pont de WIEN, commande la paire de transistors 106, 107.

La valeur des condensateurs 111, 112 et des résistances 113, 114 détermine la fréquence des oscillations. Un second amplificateur opérationnel 115, monté en inverseur de gain unitaire, commande la paire de transistors 108, 109. Les résistances 116 et 117, de même valeur, créent, à leur point commun 118, un potentiel intermédiaire par rapport aux bornes d'alimentation 38 et 51 de la batterie ; ce potentiel est nécessaire pour permettre une commande correcte des paires de transistors 106, 107 et 108, 109 par les amplificateurs opérationnels 110 et 115.

L'invention a été décrite en détail pour un exemple de réalisation donnée. Il est bien entendu que diverses modifications à la portée de l'homme de l'art et du domaine des équivalents rentrent dans son cadre.

En ce qui concerne les applications, elles ne doivent pas se limiter à l'alimentation des électro-porteurs à aimant électromagnétique mais à diverses utilisations nécessitant une alimentation en courant continu à polarités inversables.

0013637

REVENDICATIONS

1. Circuit d'alimentation en courant continu à tension réglable et inversion de polarité à partir d'une machine tournante génératrice de courant continu, auto-excitée, à bobinage de type shunt alimenté par une source indépendante de tension continue caractérisé en ce que le circuit inducteur comprend d'une part, aux bornes de la bobine d'excitation (6) un circuit d'inversion bipolaire (8) alimenté à partir de la source indépendante de tension continue (7) et commandé à partir d'un inverseur manuel (37) par couplage optoélectronique, le circuit inducteur comprenant d'autre part en série avec la bobine d'excitation (6) un circuit bidirectionnel de commutation (13) à action différée, couplé optoélectriquement par 66 à un temporisateur (53) permettant d'ajuster dans chacun des cas de polarités la valeur de la tension induite et en ce que le circuit induit comprend aux bornes d'utilisation (2) et (3) un stabilisateur (36) de tension commandant le circuit bidirectionnel de commutation (13) par l'émetteur du photocoupleur (66) du temporisateur (53).

2. Circuit selon la revendication 1 caractérisé en ce que le temporisateur (53) est constitué par un transistor unijonction commandant la gachette d'un thyristor (64) prévu dans le circuit émetteur du photocoupleur (66), le temporisateur est commandé à partir d'un circuit monostable à durée ajustable déclenché par les coupures de potentiel consécutives au passage à zéro de l'inversion, ledit temporisateur bloquant le circuit d'inversion bipolaire (8) de la source de tension continue et le circuit bidirectionnel de commutation (13) pendant la durée de temporisation.

3. Circuit selon la revendication 1 caractérisé en ce que le circuit bidirectionnel de commutation placé en série avec la bobine d'excitation comporte un pont formé de quatre diodes (14), (15), (16), (17), un transistor (18) monté selon la diagonale du pont, l'émetteur et collecteur shuntés par la varistance (70) dont la base est commandée par le phototransistor (67) du photocoupleur (66), les résistances (19) et (20) en série avec les diodes (15) et (16) permettent le réglage de la tension aux bornes du pont.

4. Circuit selon la revendication 1 caractérisé en ce que le stabilisateur de la tension d'induit relié au circuit temporisateur et par liaison optoélectronique au circuit bidirectionnel de commutation (13) comprend un circuit capteur de la tension aux bornes de la charge formé par deux dérivations à diodes normales et électroluminescentes placés tête bêche de manière à exciter les phototransistors (100) et (101) selon le niveau de tension aux bornes (2) et (3) et leus deux cas de polarités, lesdits photo-

0013637

transistors étant reliés à l'entrée positive d'un comparateur dont l'entrée négative est connectée à une tension constante de référence fournie par une diode Zéner (98), la sortie (93) du comparateur commande un circuit intégré (89) alimenté en tension alternative sur une de ses entrées (96) fournissant des rampes de tension à fréquence fixe dont la largeur est commandée par le comparateur (97) c'est-à-dire la différence de tension entre la tension de référence et la tension d'induit.

5.      Circuit selon la revendication 1 caractérisé en ce que la source indépendante de courant continu est un condensateur ou une batterie de condensateurs  chargé (e) à partir d'une batterie électrique de courant continu à travers un onduleur statique, un transformateur et un pont redresseur.

6.      Application du circuit selon l'une quelconque des revendications précédentes à l'alimentation d'un électroporteur à aimant électromagnétique installé sur un engin autonome de manutention, dans laquelle les batteries d'équipement dudit engin autonome fournissent, sous faible puissance, l'énergie nécessaire à la commande d'inversion de polarité et à l'excitation de la génératrice alimentant l'électro-porteur.

FIG.1

0013637

# FIG. 2

FIG. 3

FIG. 4

**RAPPORT DE RECHERCHE EUROPEENNE**

Office européen des brevets

EP 80 40 0006

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | US - A - 3 102 219 (R.G. LE-TOURNEAU) <br> * Colonne 2, lignes 9-13; colonne 3, lignes 3-22; colonne 4, lignes 28-38; colonne 5, lignes 23-29; figures * | 1 | B 66 C 1/08 <br> H 02 P 9/08 <br> H 01 F 7/18 |
| A | DE - B - 1 194 042 (RHEINISCHE ELEKTRO-MASCHINENFABRIK) <br> * Colonne 1, lignes 17-29; colonne 1, ligne 32 à colonne 2, ligne 36; figures * | 1 | **DOMAINES TECHNIQUES RECHERCHES (Int. Cl. ³)** |
| A | FR - A - 1 393 385 (LE MATERIEL ELECTRIQUE) <br> * Page 1, colonne de gauche, lignes 1-9; page 1, colonne de droite, ligne 16 à page 2, colonne de gauche, ligne 12; figures * | 1,4 | B 66 C 1/08 <br> 1/06 <br> H 01 F 7/18 <br> H 02 P 9/30 <br> 9/08 <br> H 01 F 7/20 <br> H 02 K 23/06 <br> H 02 P 9/10 <br> 9/12 <br> 7/34 |
| A | US - A - 2 976 473 (B.C. SHAW et al) <br> * Colonne 1, lignes 15-45; colonne 1, lignes 54-71; figures * | 1,4 | |
| A | FR - A - 2 170 565 (ELECTROLUX) <br> * Page 1, lignes 25-35; page 2, ligne 35 à page 3, ligne 15, figure 2 * | 1 | **CATEGORIE DES DOCUMENTS CITES** <br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | | | &: membre de la même famille, document correspondant |

X · Le présent rapport de recherche a été établi pour toutes les revendications

| Lieu de la recherche | Date d'achevement de la recherche | Examinateur |
|---|---|---|
| La Haye | 24-03-1980 | RUGGIU |

OEB Form 1503.1  06.78